# EUROPEAN PATENT APPLICATION

(11) **EP 2 360 917 A1**
(43) Date of publication of application: **24.08.2011**
(21) Application number: 09831483.4
(22) Date of filing: 14.12.2009
(51) Int. Cl.: H04N 7/14

(54) **SERVICE GUIDE SENDING METHOD, ACQUIRING METHOD, SERVER, TERMINAL AND SYSTEM**

(30) Priority: 12.12.2008 CN 200810239551
(71) Applicant: Huawei Device Co., Ltd., Longgang District Shenzhen Guangdong 518129 (CN)
(72) Inventor: CHEN, Guoqiao, Shenzhen Guangdong 518129 (CN); ZHANG, Chuxiong, Shenzhen Guangdong 518129 (CN); ZHANG, Huiping, Shenzhen Guangdong 518129 (CN); YANG, Jian, Shenzhen Guangdong 518129 (CN)
(74) Representative: Epping - Hermann - Fischer
(86) International application number: PCT/CN2009/075550
(87) International publication number: WO 2010/066206

(57) **Abstract**

Embodiments of the present invention disclose a Service Guide (SG) sending method, an SG acquiring method, a server, a terminal, and a system. The SG sending method includes: generating a Service Guide Delivery Descriptor (SGDD) that includes interactive SG description information as a basis for a terminal to determine whether to acquire an SG through an interactive network; and sending the SGDD to the terminal. The SG acquiring method includes: according to a received SGDD, acquiring interactive SG description information included in the SGDD; and acquiring the SG through an interactive network if the interactive SG description information fulfills preset conditions. In this way, the terminal on an interactive network or a converged network acquires the SG through the interactive network more efficiently.

## Description

This application claims priority to Chinese Patent Application No. 200810239551.8, filed with the Chinese Patent Office on December 12, 2008 and entitled "SERVICE GUIDE SENDING METHOD, SERVICE GUIDE ACQUIRING METHOD, SERVER, TERMINAL AND SYSTEM", which is incorporated herein by reference in its entirety.

### FIELD OF THE INVENTION

The present invention relates to communication technologies, and in particular, to a Service Guide (SG) sending method, an SG acquiring method, a server, a terminal, and a system.

### BACKGROUND OF THE INVENTION

To provide a uniform service platform for mobile video broadcast, the Open Mobile Alliance (OMA) puts forward a new Mobile Broadcast Services (BCAST) system. In the BCAST system, an SG includes multiple data fragments: one or more fragments are encapsulated into a Service Guide Delivery Unit (SGDU). A Service Guide Delivery Descriptor (SGDD) is generated to describe the multicast session information corresponding to a file delivery session that sends the SGDU, and provide updated SG description information and the mode of acquiring the updated SG When the SG information on the server is updated, the server notifies the terminal by sending an SGDD to the terminal.

The SGDD is sent through a broadcast channel or an interactive channel. In the prior art, the SGDD is sent through a broadcast channel by default. Therefore, the SGDD carries the description information of the broadcast SG and the session access mode of the broadcast SG. Meanwhile, the SGDD in the prior art carries an AlternativeAccessURL to improve compatibility of converged networks (including a broadcast network and an interactive network). The terminal may send a query request and/or an update request via the Hypertext Transfer Protocol (HTTP) to the server pointed to by the AlternativeAccessURL, so as to acquire the interactive SG data determined by the terminal as available.

In the process of implementing embodiments of the present invention, the inventor finds that: In the prior art, after the terminal receives the SGDD, the terminal sends a query request to the server pointed to by the AlternativeAccessURL to ask whether any available SG fragment exists on the interactive network; after acquiring a query result, the terminal determines whether to initiate, to the server, a procedure for acquiring the SG fragment; if the query result indicates that the SG fragment determined by the terminal as available does not exist on the interactive network, the terminal does not initiate the procedure for acquiring the SG fragment through the interactive network, and the query is futile. Therefore, it is inefficient for the terminal to acquire the SG through an interactive network in the prior art.

### SUMMARY OF THE INVENTION

Embodiments of the present invention provide an SG sending method, an SG acquiring method, a server, a terminal, and a system so that a terminal can acquire an SG through an interactive network more efficiently.

An embodiment of the present invention provides an SG sending method, including:
generating an SGDD that includes interactive SG description information as a basis for a terminal to determine whether to acquire an SG through an interactive network; and
sending the SGDD to the terminal.

An embodiment of the present invention provides an SG acquiring method, including:
according to a received SGDD, acquiring interactive SG description information included in the SGDD; and
acquiring an SG through an interactive network if the interactive SG description information fulfills preset conditions.

An embodiment of the present invention provides a server, including:
a generating module, configured to generate an SGDD that includes interactive SG description information as a basis for a terminal to determine whether to acquire an SG through an interactive network; and
a sending module, configured to send the SGDD to the terminal.

An embodiment of the present invention provides a terminal, including:
a description information acquiring module, configured to acquire, according to a received SGDD, interactive SG description information included in the SGDD; and
an SG acquiring module, configured to acquire an SG through an interactive network if the interactive SG description information fulfills preset conditions.

An embodiment of the present invention provides an SG processing system, including:
a server, configured to generate an SGDD that includes interactive SG description information; and
a terminal, configured to acquire an SG through an interactive network if the interactive SG description information fulfills preset conditions.

By using the SG sending method, SG acquiring method, server, terminal, and system provided herein, the terminal can determine whether to acquire an SG through an interactive network according to interactive SG description information in an SGDD, which prevents the terminal from initiating a query according to the SGDD blindly, and enables a terminal on the interactive network or converged network to acquire the SG through the interactive network more efficiently.

### BRIEF DESCRIPTION OF THE DRAWINGS

To make the technical solution in the embodiments of the present invention or in the prior art clearer, the following outlines the accompanying drawings involved in the description of the embodiments of the present invention or the prior art. Apparently, the accompanying drawings outlined below are illustrative and not exhaustive, and persons of ordinary skill in the art can derive other drawings from such accompanying drawings without creative efforts.
FIG. 1 is a flowchart of an SG sending method according to an embodiment of the present invention;
FIG. 2 is a flowchart of an SG acquiring method according to an embodiment of the present invention;
FIG. 3 is a schematic diagram showing service distribution of a BCAST system according to an embodiment of the present invention;
FIG. 4 is a flowchart of an SG sending method and an SG acquiring method according to a first embodiment of the present invention;
FIG. 5 is a flowchart of an SG sending method and an SG acquiring method according to a second embodiment of the present invention;
FIG. 6 is a flowchart of an SG sending method and an SG acquiring method according to a third embodiment of the present invention;
FIG. 7 is a schematic structural diagram of a server according to an embodiment of the present invention;
FIG. 8 is a schematic structural diagram of a terminal according to an embodiment of the present invention; and
FIG. 9 is a schematic structural diagram of an SG processing system according to an embodiment of the present invention.

### DETAILED DESCRIPTION OF THE EMBODIMENTS

The technical solution of the present invention is described below with reference to the accompanying drawings and exemplary embodiments. The following detailed description is given with reference to the accompanying drawings to provide a thorough understanding of the present invention. Evidently, the drawings and the detailed description are merely representative of exemplary embodiments of the present invention rather than all embodiments. All other embodiments, which can be derived by those skilled in the art from the embodiments given herein without creative effort, shall fall within the protection scope of the present invention.

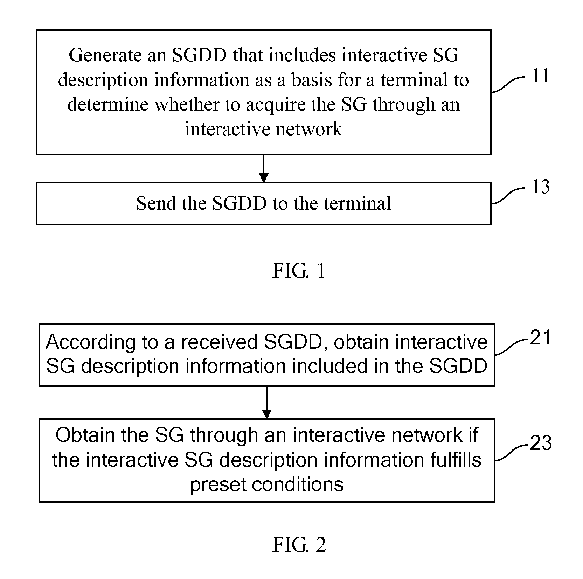

FIG. 1 is a flowchart of an SG sending method provided in an embodiment of the present invention. As shown in FIG. 1, the method in this embodiment includes the following steps:
Step 11: Generate an SGDD that includes interactive SG description information as a basis for a terminal to determine whether to acquire the SG through an interactive network.

The interactive SG description information is a basis for the terminal to determine whether to acquire the SG through the interactive network. In practice, the interactive SG description information may include: description information indicating whether any updated SG exists on the interactive network; or description information indicating whether the interactive SG includes any fragment other than the broadcast SG; or updated SG description information on the interactive network, for example, fragment name, version, and validity period.

Step 13: Send the SGDD to the terminal.

When the interactive SG description information fulfills the preset conditions, the terminal determines the need of acquiring the SG through the interactive network. In this case, the terminal may initiate a procedure for acquiring the SG through the interactive network according to the interactive SG description information.

In this embodiment, the interactive SG description information in the SGDD tells the terminal whether the SG fragment information in the current SGDD is complete, and whether any other available SG fragment not described by the SGDD currently exists on the interactive network; or, the SGDD in this embodiment tells the terminal which SG fragments are available on the interactive network. Therefore, the terminal can initiate a query accurately according to actual conditions, the number of times of futile queries is reduced, and the terminal on the interactive network or converged network can acquire the SG through the interactive network more efficiently.

FIG. 2 is a flowchart of an SG acquiring method provided in an embodiment of the present invention. As shown in FIG. 2, the method in this embodiment includes the following steps:
Step 21: According to a received SGDD, acquire interactive SG description information included in the SGDD.

The interactive SG description information is delivered by the server as a basis for determining whether to acquire the SG through the interactive network. In practice, the interactive SG description information may include: description information indicating whether any updated SG exists on the interactive network; or description information indicating whether the interactive SG includes any fragment other than the broadcast SG; or updated SG description information on the interactive network, for example, fragment name, version, and validity period.

Step 23: Acquire the SG through an interactive network if the interactive SG description information fulfills preset conditions.

After the interactive SG description information is acquired, the terminal decides whether it is necessary to send a request for updating the SG fragment according to the interactive SG description information. After determining the need of sending the update request, the terminal initiates, to the address, a procedure for querying or acquiring the SG fragment specified in the interactive SG acquiring mode indicated in the SGDD. The following is an example:

If the interactive SG description information includes the description information indicating whether any updated SG exists on the interactive network, the terminal may make judgment according to the interactive SG description information; if the interactive SG description information indicates that an updated SG exists on the interactive network, the terminal initiates a procedure for acquiring the SG through the interactive network; otherwise, the terminal does not need to initiate the procedure for acquiring the SG through the interactive network.

If the interactive SG description information includes the updated SG description information on the interactive network, the terminal may compare the updated SG description information with the locally stored SG description information. If the updated SG description information on the interactive network differs from the stored SG description information (for example, the validity periods of the SG fragments differ, or the versions of the SG fragments differ), the terminal initiates a procedure for acquiring the SG through the interactive network; otherwise, the terminal does not need to initiate the procedure for acquiring the SG through the interactive network.

If the interactive SG description information includes the description information indicating whether the interactive SG includes any fragment other than the broadcast SG, the terminal may make judgment according to the interactive SG description information; if the interactive SG description information indicates that the interactive SG includes a fragment other than the broadcast SG, the terminal initiates a procedure for acquiring the SG through the interactive network; otherwise, the terminal does not need to initiate the procedure for acquiring the SG through the interactive network.

In this embodiment, the interactive SG description information in the SGDD tells the terminal whether the SG fragment information in the current SGDD is complete, and whether any other available SG fragment not described by the SGDD currently exists on the interactive network, which helps the terminal know the complete SG fragment information delivered by the BCAST system server through the broadcast network and interactive network and the mode of acquiring the SG fragment information; or, the SGDD in this embodiment tells the terminal which SG fragments are available on the interactive network. In this way, the terminal can acquire the desired SG fragment data in a proper mode according to actual conditions, reduce the number of times of queries in the process of acquiring the SG fragment data, and reduce the probability of errors; and the terminal on the interactive network or converged network can acquire the SG through the interactive network more efficiently.

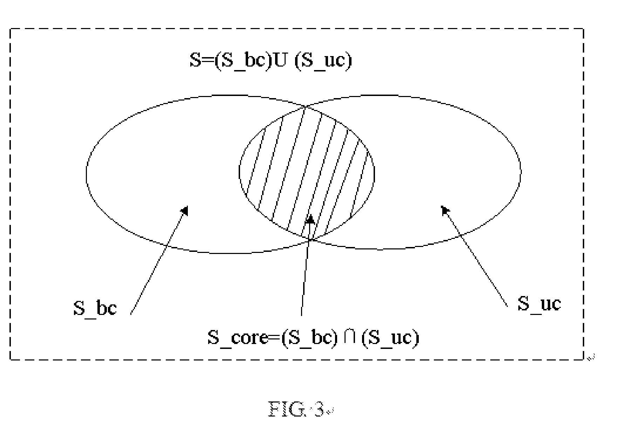

FIG. 3 is a schematic diagram showing service distribution of a BCAST system according to an embodiment of the present invention. The following describes the basic principles of improving the efficiency of the terminal in acquiring the SG through an interactive network in an embodiment of the present invention with reference to FIG. 3. In FIG. 3, S represents all mobile video broadcast services involved in the BCAST system. The access modes of the services involved in the whole system may include: broadcast network bearer and interactive network bearer; broadcast networks may include a Multimedia Broadcast/Multicast Service (MBMS) network, a Broadcast Multicast Service (BCMCS) network, and a Digital Video Broadcast - Handheld (DVB-H) network; and interactive networks may include a Packet-Switched domain (PS) network such as a Wideband Code Division Multiple Access (WCDMA). Generally, the broadcast network bearer is a main bearer mode of the services such as mobile television; the interactive network bearer is designed to make up for the shortage of the broadcast network bearer, and is generally applied in rural areas or the areas scarcely covered by the broadcast network; and the interactive network bearer also works in the areas covered by the broadcast network, and is primarily used to act as feedback channels. Besides, for some services such as Video on Demand (VoD), the broadcast network bearer can hardly meet the requirements of service access, and such services may be carried by an interactive network. In the following description, S_bc represents a service provided by a broadcast network bearer, S_uc represents a service provided by an interactive network bearer, and S_core represents a service which may be provided by a broadcast network bearer or an interactive network bearer.

The OMA standard stipulates that the mobile video broadcast services must provide SG information for users so that the terminal can subscribe to programs or request to watch programs according to the related information provided in the SG. The services of different access modes have the corresponding SG information. In the following description, SG_bc represents the SG of S_bc, SG_uc represents the SG of S_uc, and SG_core represents the SG of S_core. The content of SG_bc is acquired through the broadcast network; the content of the SG_uc is acquired through the interactive network; and the content of SG_core may be acquired through a broadcast network or an interactive network.

When the SG content of the server is updated, in order to prevent the terminal from receiving the same SG content repeatedly, the server does not send the SG content to the terminal directly, but adds the updated SG fragment information to be delivered to the SGDD and sends the SGDD to the terminal. Therefore, the acquiring of the SG content is related to the information carried in the SGDD. Specifically, for the purpose of acquiring the content of S_bc, the SGDD needs to carry description information of the SG_bc fragment; for the purpose of acquiring the content of S_uc, the SGDD needs to carry description information of the SG_uc fragment; for the purpose of acquiring the content of SG_core, the SGDD needs to carry description information of the SG_core fragment. The description information of the SG_core fragment may be the same as or different from the description information of the SG_uc fragment or SG_bc fragment.

In the prior art, the SGDD is sent through a broadcast network by default. Therefore, the SGDD carries the description information of the SG_bc fragment and the mode of acquiring SG_bc, and may further carry an AlternativeAccessURL. The default description information of AlternativeAccessURL indicates that the fragment (such as the S_uc fragment or S_core fragment) not declared in the SGDD DescriptorEntry may be acquired from the server pointed to by the AlternativeAccessURL, and that the SG_bc fragment declared in the DescriptorEntry may also be acquired from the server pointed to by the AlternativeAccessURL. Consequently, after receiving the SGDD, the terminal is unable to judge, according to the AlternativeAccessURL alone, whether any updated SG fragment or any SG fragment available to the terminal exists on the interactive network. Therefore, the terminal sends a query request to the server pointed to by the AlternativeAccessURL. If no SG fragment available to the terminal exists on the interactive network, the query initiated by the terminal is futile. In the process of implementing the present invention, the inventor finds that: If the terminal knows the SG description information on the interactive network beforehand, the probabilities of futile queries of the terminal may be reduced drastically, and the terminal can acquire the SG content through the interactive network more efficiently.

Unlike the prior art, the server in the embodiments of the present invention adds the interactive SG description information to the SGDD delivered to the terminal. After receiving the SGDD that carries the interactive SG description information, the terminal decides whether it is necessary to send a request for querying or acquiring the SG according to the description information; if it is unnecessary to send a request for querying or acquiring the SG, the terminal will not send the request for querying or acquiring the SG. Therefore, the terminal sends the query request more accurately, the number of times of futile queries is reduced, and the terminal on the interactive network or converged network can acquire the SG through the interactive network more efficiently.

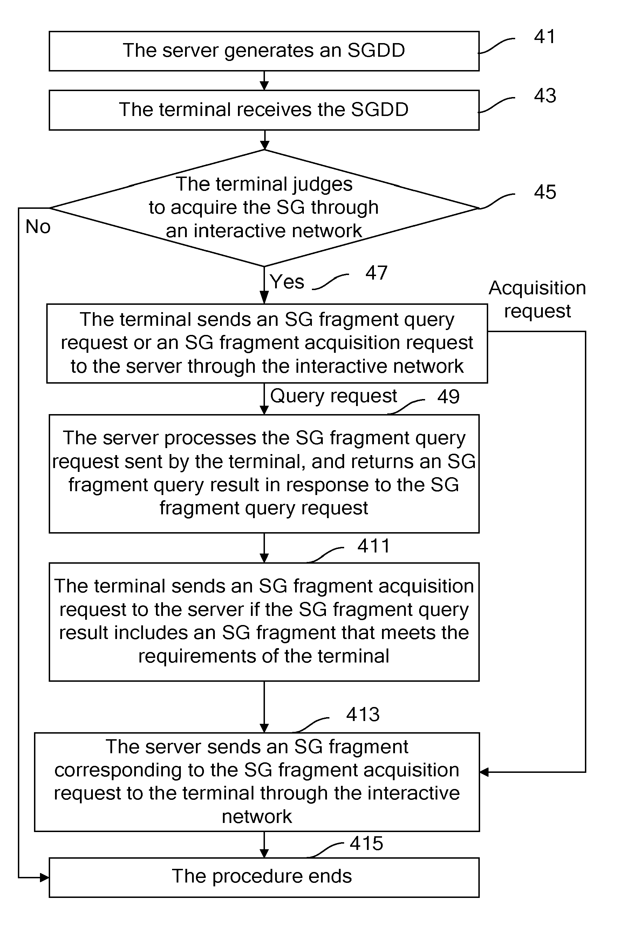

FIG. 4 is a flowchart of an SG sending method and an SG acquiring method according to a first embodiment of the present invention. As shown in FIG. 4, the method in this embodiment includes the following steps:
Step 41: The server generates an SGDD.

In this embodiment, when the server generates an SGDD, the server may modify the format of the SGDD by adding a new element or entry to the existing format of the SGDD to indicate whether an additional fragment is available on the interactive network, namely, to indicate whether any updated SG fragment information exists on the interactive network, or to indicate whether the interactive SG includes any fragment other than the broadcast SG

Table 1 shows a modified format of the SGDD in the first embodiment of the present invention, in which the black bold part represents main differences between this embodiment of the present invention and the prior art. As shown in Table 1, the DescriptorEntry in the SGDD format includes a new element "AdditionalFragmentAvailable" or a new entry "AdditionalFragmentAvailable". This new element or new entry indicates whether any additional SG fragment (the updated SG or any fragment other than the broadcast SG) is available on the interactive network. The value of this element is a Boolean value. The value "0" indicates that no updated SG fragment information exists on the interactive network. The value "1" indicates that updated SG fragment information exists on the interactive network.

**Table 1 Embodiment 1 of modified SGDD format**

| **Name** | **Type** | **Category** | **Cardinality** | **Description** | **Data Type** |
|---|---|---|---|---|---|
| ServiceGuideD eliveryDescript or (SGDD) | E | | | The SGDD includes the following attributes: ID, and version. The SGDD includes the following elements: NotificationReception, BSMList, and DescriptorEntry. | |
| id | A | NM/TM | | An ID identifies an SGDD 0..1 an SGDD uniquely in a specific SG. | anyURI |
| Version | A | NM/TM | 0..1 | Indicates the version of the SGDD. The SGDD of a new version replaces the t SGDD of the old version. | unsignedInt |
| ... | ... | ... | ... | ... | ... |
| DescriptorEntry | E1 | NM/TM | 1..N | Any entry in the SGDD includes the following attribute: type. Any entry in the SGDD includes the following elements: GroupingCriteria, Transport, AdditionalFragmentAvailab le, AlternativeAccessURL, and ServiceGuideDeliveryUnit. | |
| ... | ... | ... | ... | ... | ... |
| Transport | E2 | NM/TM | 0..1 | The transmission session information corresponding to the SGDU described in this entry includes the following attributes: ipAddress (destination IP address corresponding to the target transmission session), port (destination port corresponding to the target transmission session), srcIpAddress (source IP address of the transmission session), transmissionSessionID (TSI identifier of the session at the ALC/LCT layer), and hasFDT (FDT is carried in the transmission session or not) | |
| ... | ... | ... | ... | ... | ... |
| **AdditionalFra gmentAvailable** | **E2** | **NM/TM** | **0.. 1** | **Indicates whether an additional SG fragment exists. This element is a Boolean value, the value "0" indicates no additional SG fragment exists, and "1" indicates an additional SG exists.** | **boolean** |
| AlternativeAcc essURL | E2 | NM/TM | 0..N | Indicates the alternative URL for acquiring the SG through an interactive channel. | anyURI |
| ServiceGuideD eliveryUnit | E2 | NM/TM | 1..N | Indicates information about a group of fragments. | |
| ... | ... | ... | ... | ... | ... |
| PrivateExt | E1 | NO/TO | 0..1 | Indicates extension information. | |
| <proprietary elements> | E2 | NO/TO | 0..N | Indicates extension information. | |

The SGDD generated by the server in the modified SGDD format includes: broadcast SG description information, mode of acquiring broadcast SG, interactive SG description information (AdditionalFragmentAvailable), and mode of acquiring interactive SG (AlternativeAccessURL).

Step 43: The terminal receives the SGDD.

Step 45: The terminal judges whether it is necessary to acquire the SG fragment through an interactive network according to the information in the SGDD; if it is necessary to acquire the SG fragment through an interactive network, the procedure proceeds to step 47; if it is unnecessary to acquire the SG fragment through an interactive network, the procedure proceeds to step 415.

After receiving the SGDD, the terminal checks the elements included in the DescriptorEntry in the SGDD. If the value of the AdditionalFragmentAvailable element under the DescriptorEntry is "1", it indicates that updated SG fragment information exists on the interactive network. In this case, the terminal determines the need of sending an SG fragment query request through the interactive network, and the procedure proceeds to step 47; if the value of the AdditionalFragmentAvailable element under the DescriptorEntry is "0", it indicates that no updated SG fragment information exists on the interactive network. In this case, the terminal does not need to send the SG fragment query request through the interactive network, and the procedure proceeds to step 415.

Step 47: The terminal sends an SG fragment query request or an SG fragment acquisition request to the server through the interactive network; in the case of the SG fragment query request, the procedure proceeds to step 49; in the case of the SG fragment acquisition request, the procedure proceeds to step 413.

Step 49: The server processes the SG fragment query request sent by the terminal, and returns an SG fragment query result in response to the SG fragment query request.

Step 411: The terminal sends an SG fragment acquisition request to the server if the SG fragment query result includes an SG fragment that meets the requirements of the terminal.

Step 413: The server sends an SG fragment corresponding to the SG fragment acquisition request to the terminal through the interactive network.

Step 415: The procedure ends.

In this embodiment, the terminal knows, according to the information in the SGDD, whether the SG fragment declared in the SGDD is complete. The terminal initiates a procedure for acquiring the SG fragment through the interactive network only if any additional SG fragment exists on the interactive network. Therefore, the terminal sends the query request more accurately, the number of times of futile queries is reduced, and the terminal acquires the SG through the interactive network more efficiently. Moreover, the terminal acquires the SG fragment through the broadcast network and the interactive network, which improves compatibility of converged networks.

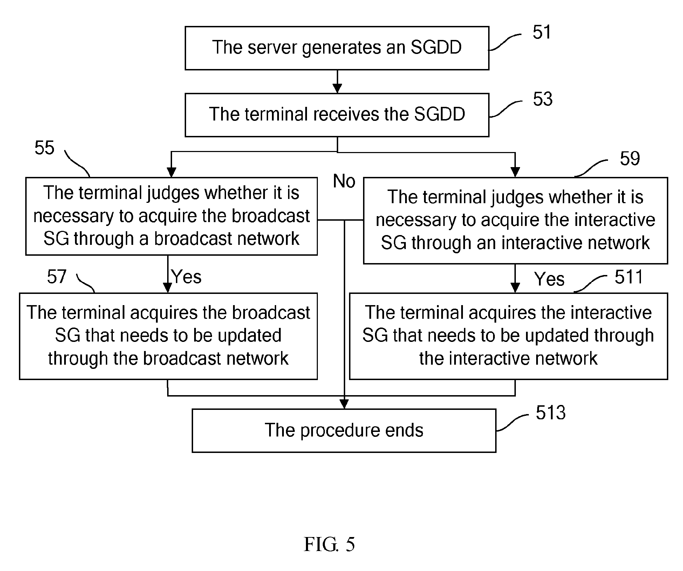

FIG. 5 is a flowchart of an SG sending method and an SG acquiring method according to a second embodiment of the present invention. This embodiment differs from the embodiment shown in FIG. 4 in that: The interactive SG description information in this embodiment includes the updated SG description information on the interactive network. As shown in FIG. 5, the method in this embodiment includes the following steps:
Step 51: The server generates an SGDD.

When generating the SGDD, the server in this embodiment modifies the format of the SGDD in the prior art. Table 2 shows a modified format of the SGDD in the second embodiment of the present invention, in which the black bold part represents main differences between this embodiment of the present invention and the prior art. As shown in Table 2, the modifications made to the SGDD format of the prior art in this embodiment include: adding interactive SG description information under the DescriptorEntry of the existing SGDD format to indicate the updated SG description information on the interactive network, and separate the interactive SG description information from the broadcast SG description information on the DescriptorEntry level of the SGDD format.

Specifically, an AlternativeAccessServiceGuideDeliveryUnit element is added to indicate the available SG fragment on the interactive network. The type of this element is the same as the type of the ServiceGuideDeliveryUnit element that describes the broadcast SG. This element may include information such as fragment name and fragment version.

**Table 2 Embodiment 2 of modified SGDD format**

| **Name** | **Type** | **Category** | **Cardinality** | **Description** | **Data Type** |
|---|---|---|---|---|---|
| ServiceGuideD eliveryDescript or | E | | | The SGDD includes the following attributes: ID, and version. The SGDD includes the following elements: NotificationReception, BSMList, and DescriptorEntry. | |
| id | A | NM/TM | 0..1 | An ID identifies an SGDD uniquely in a specific SG. | anyURI |
| Version | A | NM/TM | 0.1 | Indicates the version of the SGDD. The SGDD of a new version replaces the SGDD of the old version. | unsignedI nt |
| ... | ... | ... | ... | ... | ... |
| DescriptorEntry | E1 | NM/TM | 1..N | Any entry in the SGDD includes the following attribute: type. Any entry in the SGDD includes the following elements: GroupingCriteria, Transport, AlternativeAccessURL, and ServiceGuideDeliveryUnit. | |
| ... | ... | ... | ... | ... | ... |
| Transport | E2 | NM/TM | 0..1 | The transmission session information corresponding to the SGDU described in this entry includes the following attributes: ipAddress (destination IP address corresponding to the target transmission session), port (destination port corresponding to the target transmission session), target srcIpAddress (source IP address of the transmission session), transmissionSessionID (TSI identifier of the session at the ALC/LCT layer), and hasFDT (FDT is carried in the transmission session or not). | |
| ... | ... | ... | ... | ... | ... |
| AlternativeAcc essURL, | E2 | NM/TM | 0..N | Indicates the alternative URL for acquiring the SG through an interactive channel. | anyURI |
| ServiceGuideD eliveryUnit | E2 | NM/TM | 1..N | Indicates information about a group of fragments. | |
| ... | ... | ... | ... | ... | ... |
| **AlternativeAcc essServiceGui deDeliveryUnit** | **E2** | **NM/TM** | **1..N** | **Indicates information about a group of fragments.** | |
| **contentLocation** | **A** | **NM/TM** | **0..1** | **Indicates the location of the SGDU.** | **anyURI** |
| **validFrom** | **A** | **NM/TM** | **0..1** | **Indicates the start time of validity,** | **unsignedI nt** |
| **validTo** | **A** | **NM/TM** | **0..1** | **Indicates the end time of validity.** | **unsignedI nt** |
| **Fragment** | **E3** | **NM/TM** | **1..N** | **Indicates SG fragment information.** | |
| **id** | **A** | **NM/TM** | **1** | **Indicates the ID of an announced SG fragment.** | **anyURI** |
| **Version** | **A** | **NM/TM** | **1** | **Indicates the version of the announced SG fragment.** | **unsignedI nt** |
| **validFrom** | **A** | **NM/TM** | **0..1** | **Indicates the start time of validity of this fragment.** | **unsignedI nt** |
| **validTo** | **A** | **NM/TM** | **0..1** | **Indicates the end time of validity of this fragment.** | **unsignedI nt** |
| **fragmentEnco ding** | **A** | **NM/TM** | **1** | Indicates the coding mode of this SG fragment: 0 - OMA BCAST SG fragment coded in the XML format 1 - SDP fragment 2 - MBMS user service description 3 - relevant transmission process coded in the XML format 4-255 - reserved | **unsigned Byte** |
| | | | | **Indicates the type of the SG fragment coded in the XML format:** | |
| | | | | **0 - unspecified** | |
| | | | | **1 - "service" fragment** | |
| | | | | **2 - "Content" fragment** | |
| | | | | **3 - "Schedule" fragment** | |
| | | | | **4 - "Access" fragment** | |
| **fragmentType** | **A** | **NM/TM** | **0..1** | **5 - "PurchaseItem" fragment** | **unsigned Byte** |
| | | | | **6 - "PurchaseData" fragment** | |
| | | | | **7 - "PurchaseChannel" fragment** | |
| | | | | **8 - "PreviewData" fragment** | |
| | | | | **9 - "InteractivityData" fragment** | |
| | | | | **10 to 255 - reserved** | |
| **GroupingCrite ria** | **E4** | **NM/TM** | **0..1** | **Indicates information about how to group the SG fragments described by this SGDD entry.** | |
| **TimeGrouping Criteria** | **E5** | **NM/TM** | **0..1** | **Indicates the time segment described by this entry.** | |
| **startTime** | **A** | **NM/TM** | **1** | **Indicates start time.** | **unsignedI nt** |
| **endTime A** | | **NM/TM** | **1** | **Indicates end time.** | **unsignedI nt** |
| **BSMSelector** | **E5** | **NM/ TM** | **0..N** | **Indicates the BSM corresponding to the SGDU fragment.** | |
| **idRef** | **A** | **NM/TM** | **1** | **BSMSelector ID.** | **anyURI** |
| PrivateExt | E1 | NO/TO | 0..1 | Indicates extension information. | |
| <proprietary elements> | E2 | NO/TO | 0..N | Indicates extension information. | |

Step 53: The terminal judges, according to the received SGDD, whether it is necessary to initiate an SG update procedure, and the procedure proceeds to step 55 or step 59.

The terminal checks the DescriptorEntry in the SGDD in the process of checking the acquired SGDD. In this case, the terminal may parse the detailed information under the AlternativeAccessServiceGuideDeliveryUnit and the ServiceGuideDeliveryUnit. In this example, it is deemed that the description made by the SGDU to each available SG fragment is separated. Therefore, the terminal needs to respectively judge whether any broadcast SG fragment and whether any interactive SG fragment need to be updated.

Step 55: The terminal determines whether it is necessary to acquire the broadcast SG through a broadcast network; if it is necessary to acquire the broadcast SG through a broadcast network, the procedure proceeds to step 57; if it is unnecessary to acquire the broadcast SG through a broadcast network, the procedure proceeds to step 513.

Step 57: Through the broadcast network, the terminal acquires the broadcast SG that needs to be updated, and the procedure proceeds to step 513.

For the broadcast SG, the terminal may compare the version and name of the fragment under the ServiceGuideDeliveryUnit, and judge whether any broadcast SG fragment needs to be updated; if any broadcast SG fragment needs to be updated, the terminal may acquire the relevant SG fragment according to the access information in the "Transport" and the session information in the "ServiceGuideDeliveryUnit".

For the interactive SG, the terminal may compare the version and name of the fragment under the "AlternativeAccessServiceGuideDeliveryUnit", and judge whether any fragment needs to be updated or received. If any fragment needs to be updated, the terminal may acquire the relevant SG fragment by sending an unspecific or specific SG request according to the server URL specified in the AlternativeAccessURL.

Step 59: The terminal judges whether it is necessary to acquire the interactive SG through an interactive network; if it is necessary to acquire the interactive SG through an interactive network, the procedure proceeds to step 511; if it is unnecessary to acquire the interactive SG through an interactive network, the procedure proceeds to step 513.

Step 55 and step 59 are not limited in time sequence.

Step 511: The terminal acquires the interactive SG required by the terminal through an interactive network.

If the SGDD sent by the server includes an AlternativeAccessServiceGuideDeliveryUnit element, the terminal compares the element information with the locally stored SG, and checks whether any SG fragment required by the terminal exists on the AlternativeAccessServiceGuideDeliveryUnit element; if any SG fragment required by the terminal exists on the AlternativeAccessServiceGuideDeliveryUnit element, the terminal may acquire the SG fragment from the interactive network by sending an unspecific SG request, or acquire the SG fragment from the interactive network by sending a specific SG according to the specific fragment information; if no SG fragment required by the terminal exists on the AlternativeAccessServiceGuideDeliveryUnit element, the terminal does not need to send any SG request through the interactive network.

For the interactive SG, the terminal may compare the version and name of the fragment under the "AlternativeAccessServiceGuideDeliveryUnit", and judge whether any fragment needs to be updated or received. If any fragment needs to be updated, the terminal may acquire the relevant interactive SG fragment by sending an unspecific or specific SG request according to the server URL specified in the AlternativeAccessURL.

For details about how the terminal acquires the interactive SG through the interactive network, see steps 47-413 in the embodiment shown in FIG. 4.

Step 513: The procedure ends.

In this embodiment, a terminal on a converged network can know how to select a proper mode to acquire the desired broadcast SG or interactive SG according to the information in the SGDD. Therefore, the terminal acquires the SG in the converged network more efficiently, the compatibility of sending the SG in a converged network is improved, and the user experience is enhanced.

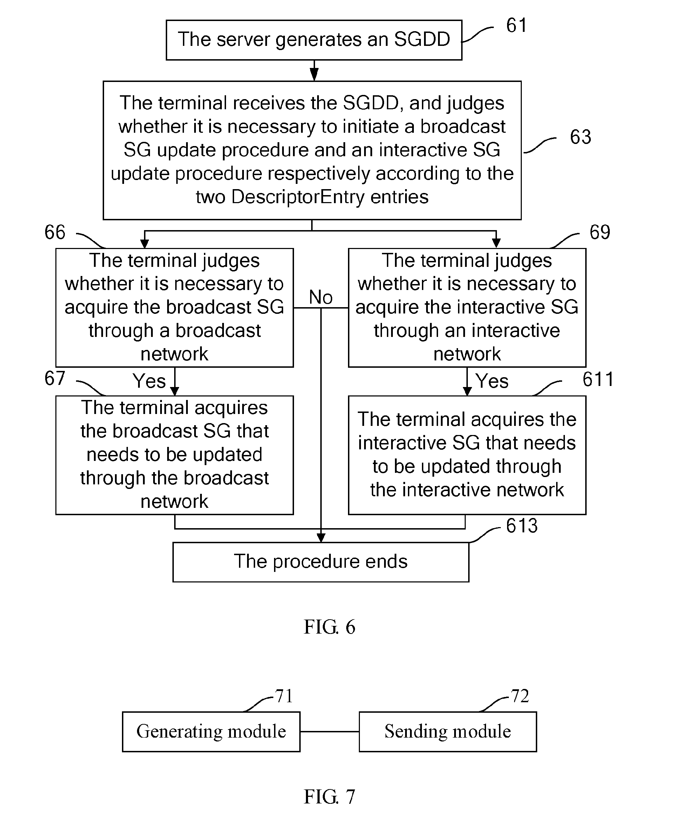

FIG. 6 is a flowchart of an SG sending method and an SG acquiring method according to a third embodiment of the present invention. This embodiment differs from the embodiment shown in FIG. 5 in that: In this embodiment, the existing SGDD format remains unchanged, and a DescriptorEntry that carries the interactive SG description information is added to the SGDD. As shown in FIG. 6, the method in this embodiment includes the following steps:
Step 61: The server generates an SGDD.

In this embodiment, when the server generates an SGDD, the existing SGDD format remains unchanged, and a DescriptorEntry that carries the interactive SG description information is added to the SGDD. Table 3 shows an XML format of the SGDD in an embodiment of the present invention, in which the black bold part represents the XML content added to the existing SGDD. For the meanings of the entries or elements corresponding to "Name" in Table 3, see Table 1 and Table 2. As shown in Table 3, at least two DescriptorEntry entries exist in the SGDD. One carries the broadcast SG description information, and the other carries the interactive SG description information. The DescriptorEntry newly added for carrying the interactive SG description information may be used to notify the terminal whether any other undeclared fragments are available on the interactive network, and which undeclared fragments are available.

**Table 3 Embodiment of XML format of SGDD**

| **Name** | **Type** | **Example** | **Data Type** |
|---|---|---|---|
| ServiceGuideDeliveryDescriptor | E | | |
| id | A | //bsda.com/sgdd/4567 | anyURI |
| Version | A | 2 | unsignedInt |
| NotificationReception (information about reception of a notification message) | E1 | | |
| Port | A | 34343 | unsignedInt |
| Address | A | 232.0.0.1 | string |
| DescriptorEntry | E1 | | |
| GroupingCriteria | E2 | | |
| TimeGroupingCriteria | E3 | | |
| startTime | A | 20 Dec 2006, 13:00 GMT in NTP | unsignedInt |
| endTime | A | 20 Dec 2006, 14:00 GMT in NTP | unsignedInt |
| BSMSelector | E3 | | |
| id | A | //operatorY.com | anyURI |
| BSMFilterCode (indicating the code of BSMselector) | E4 | OPERATOR_Y | string |
| type | A | 1 | unsignedByte |
| Name | E4 | Operator Y | string |
| Transport | E2 | | |
| ipAddress | A | 232.0.0.2 | string |
| Port | A | 8765 | unsignedShort |
| srcIpAddress | A | 1.2.3.4 | string |
| transmissionSessionID | A | 456 | unsignedShort |
| ServiceGuideDeliveryUnit | E2 | | |
| transportObj ectID | A | 2 | unsignedInt |
| validFrom (start time of validity) | A | 20 Dec 2006, 13:30 GMT in NTP | |
| validTo (end time of validity) | A | 20 Dec 2006, 14:00 GMT in NTP | |
| Fragment | E3 | | |
| Transported (transport port) | A | 1004 | unsignedInt |
| id | A | //this. example.com/service/431 | anyURI |
| Version | A | 2 | unsignedInt |
| ServiceGuideDeliveryUnit | E2 | | |
| transportObjectID | A | 9 | unsignedInt |
| validFrom (start time of A validity) | | 20 Dec 2006, 13:30 GMT in NTP | |
| validTo (end time of validity) | A | 20 Dec 2006, 14:00 GMT in NTP | |
| Fragment | E3 | | |
| transportID | A | 1007 | unsignedInt |
| id | A | //this. example.com/access/932 | anyURI |
| Version | A | 9 | unsignedInt |
| Fragment | E3 | | |
| transportID | A | 1008 | unsignedInt |
| id | A | //this. example.com/access/032 | anyURI |
| Version | A | 1 | unsignedInt |
| **DescriptorEntry** | **E1** | | |
| **GroupingCriteria** | **E2** | | |
| **TimeGroupingCriteria** | **E3** | | |
| **startTime** | **A** | **20 Dec 2006,13:00 GMT in NTP** | **unsignedint** |
| **end Time** | | | **A 20 Dec 2006,13:00 GMT in NTP unsignedint** |
| **BSMSelector** | **E3** | | |
| **id** | **A** | **operatorX.com** | **anyURI** |
| **BSMFilterCode** | **E4** | **OPERATOR_X** | **string** |
| **Type** | **A** | **1** | **unsignedByte** |
| **Name** | **E4** | **Operator X** | **string** |
| **AlternativeAccessURL** | **E2** | **http://www.sample.com** | **anyURI** |
| **ServiceGuideDeliveryUnit** | **E2** | | |
| **validFrom (start time validity)** | **of A** | **20 Dec 2006, 13:30 GMT in NTP** | |
| **valid To (end time of validity)** | **A** | **20 Dec 2006,14:00 GMT in NTP** | |
| **Fragment** | **E3** | | |
| **id** | **A** | **//this. example.com/service/430** | **anyURI** |
| **Version** | **A** | **4** | **unsignedInt** |
| **Fragment** | **E3** | | |
| **id** | **A** | **//this.operatorexample.com/acce ss/930** | **anyURI** |
| **Version** | **A** | **2** | **unsignedInt** |
| **Fragment** | **E3** | | |
| **id** | **A** | **//this. example.com/access/030** | **anyURI** |
| **Version** | **A** | **6** | **unsignedInt** |
| **Fragment** | **E3** | | |
| **id** | **A** | **//this. example.com/service/431** | **anyURI** |
| **Version** | **A** | **2** | **unsignedInt** |
| **id** | **A** | **//this. example.com/access/931** | **anyURI** |
| **Version** | **A** | **1** | **unsignedInt** |
| **Fragment** | **E3** | | |
| **id** | **A** | **//this. example.com/access/031** | **anyURI** |
| **Version** | **A** | **3** | **unsignedInt** |

In practice, the DescriptorEntry for carrying the broadcast SG description information and the mode of acquiring the broadcast SG should include a Transport element indicating that this entry carries the broadcast SG description information and the mode of acquiring the broadcast SG; the DescriptorEntry for carrying the interactive SG description information and the mode of acquiring the interactive SG should include an AlternativeAccessURL element indicating that this entry carries the interactive SG description information and the mode of acquiring the interactive SG. Moreover, the DescriptorEntry for carrying the interactive SG description information and the mode of acquiring the interactive SG includes no Transport element; and the DescriptorEntry for carrying the broadcast SG description information and the mode of acquiring the broadcast SG includes no AlternativeAccessURL element.

Step 63: The terminal receives the SGDD, and judges whether it is necessary to initiate a broadcast SG update procedure and an interactive SG update procedure respectively according to the two DescriptorEntry entries. The procedure proceeds to step 65 or step 69.

Step 65: The terminal judges whether it is necessary to acquire the broadcast SG through a broadcast network; if it is necessary to acquire the broadcast SG through a broadcast network, the procedure proceeds to step 67; if it is unnecessary to acquire the broadcast SG through a broadcast network, the procedure proceeds to step 613.

The terminal checks the DescriptorEntry in the acquired SGDD. Under the DescriptorEntry for carrying the broadcast SG description information and the mode of acquiring the broadcast SG, the terminal parses the detailed information under the ServiceGuideDeliveryUnit, and compares the version and name of the fragment under the ServiceGuideDeliveryUnit with the locally stored broadcast SG information to judge whether any fragment needs to be updated or received. If any fragment needs to be updated, the terminal may acquire the relevant SG fragment according to the access information in the Transport element and session information in the ServiceGuideDeliveryUnit.

Step 67: Through the broadcast network, the terminal acquires the broadcast SG that needs to be updated, and the procedure proceeds to step 613.

Step 69: The terminal judges whether it is necessary to acquire the interactive SG through an interactive network; if it is necessary to acquire the interactive SG through an interactive network, the procedure proceeds to step 611; if it is unnecessary to acquire the interactive SG through an interactive network, the procedure proceeds to step 613.

Step 65 and step 69 are not limited in terms of time sequence.

Step 611: The terminal acquires the interactive SG required by the terminal through an interactive network.

Under the DescriptorEntry for carrying interactive SG description information and the mode of acquiring the interactive SG, the terminal compares the version and name of the fragment under the ServiceGuideDeliveryUnit and judges whether any fragment needs to be updated or received. If any fragment needs to be updated, the terminal may acquire, according to the server URL specified in the AlternativeAccessURL, the relevant SG fragment by sending an unspecific or specific SG request.

Step 613: The procedure ends.

In this embodiment, an entry that carries interactive SG description information is added to the SGDD to solve the problem of delivering the SG through an SGDD on an interactive network or a converged network. Therefore, the terminal acquires the SG on the interactive network or converged network more efficiently, the compatibility of sending the SG on the converged network is improved, and the user experience is enhanced.

FIG. 7 is a schematic structural diagram of a server according to an embodiment of the present invention. As shown in FIG. 7, the server in this embodiment includes a generating module 71 and a sending module 72.

The generating module 71 is configured to generate an SGDD that includes interactive SG description information as a basis for a terminal to determine whether to acquire the SG through an interactive network.

The interactive SG description information is a basis for the terminal to determine whether to acquire the SG through the interactive network. In practice, the interactive SG description information may include: description information indicating whether any updated SG exists on the interactive network; or description information indicating whether the interactive SG includes any fragment other than the broadcast SG; or updated SG description information on the interactive network, for example, fragment name, version, and validity period.

The sending module 72 is configured to send the SGDD to the terminal.

In this embodiment, the terminal determines, according to interactive SG description information in the SGDD, whether to acquire the SG through an interactive network, which prevents the terminal from initiating a query according to the SGDD blindly and enables the terminal on the interactive network or converged network to acquire the SG through the interactive network more efficiently.

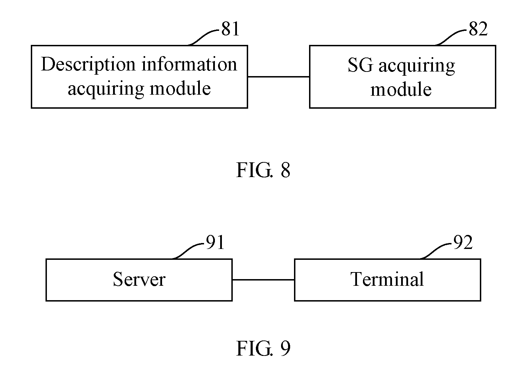

FIG. 8 is a schematic structural diagram of a terminal according to an embodiment of the present invention. As shown in FIG. 8, the server in this embodiment includes:
a description information acquiring module 81, configured to acquire, according to a received SGDD, interactive SG description information included in the SGDD; and
an SG acquiring module 82, configured to acquire the SG through an interactive network if the interactive SG description information fulfills preset conditions.

If the interactive SG description information includes the updated SG description information on the interactive network, the preset conditions may include the following condition: The updated SG description information on the interactive network differs from the stored SG description information.

If the interactive SG description information includes the description information indicating whether any updated SG exists on the interactive network, the preset conditions may include the following condition: The interactive SG description information indicates that an updated SG exists on the interactive network.

If the interactive SG description information includes the description information indicating whether the interactive SG includes any fragment other than the broadcast SG, the preset conditions may include the following condition: The interactive SG description information indicates that the interactive SG includes fragments other than the broadcast SG

In this embodiment, the terminal determines, according to interactive SG description information in the SGDD, whether to acquire the SG through the interactive network, which prevents the terminal from initiating a query according to the SGDD blindly and enables the terminal on the interactive network or converged network to acquire the SG through the interactive network more efficiently.

FIG. 9 is a schematic structural diagram of an SG processing system according to an embodiment of the present invention. As shown in FIG. 9, the system includes a server 91 and a terminal 92.

The server 91 is configured to generate an SGDD that includes interactive SG description information.

The interactive SG description information may include: description information indicating whether any updated SG exists on the interactive network; or description information indicating whether the interactive SG includes any fragment other than the broadcast SG; or updated SG description information on the interactive network, for example, fragment name, version, and validity period.

The terminal 92 is configured to acquire the SG through an interactive network if the interactive SG description information fulfills preset conditions.

The preset conditions may include the following condition: The interactive SG description information indicates that an updated SG exists on the interactive network; or the updated SG description information on the interactive network differs from the stored SG description information; or the interactive SG description information indicates that the interactive SG includes fragments other than the broadcast SG.

In this embodiment, the server adds interactive SG description information to the SGDD, and therefore, the terminal can determine whether to acquire the SG through the interactive network according to interactive SG description information in the SGDD, which prevents the terminal from initiating a query according to the SGDD blindly and enables the terminal on the interactive network or converged network to acquire the SG through the interactive network more efficiently.

In the SG processing system, the detailed functional modules of the server are described in the embodiment shown in FIG. 7, and the detailed functional modules of the terminal are described in the embodiment shown in FIG. 8, and the method for improving the efficiency of the terminal in acquiring the SG through the interactive network is described in the embodiments shown in FIG. 1 to FIG. 6.

It is understandable to those of ordinary skill in the art that the accompanying drawings are only schematic diagrams of the exemplary embodiments, and that the modules or processes in the accompanying drawings are not mandatory for implementing the present invention.

It is understandable to those of ordinary skill in the art that the modules in an apparatus provided in an embodiment of the present invention may be distributed into the apparatus described herein, or may be located in one or more apparatuses different from the apparatus described herein. The modules may be combined into one, or split into multiple submodules.

The sequence number of any embodiment above is for ease of description and does not represent the order of preference.

Persons of ordinary skill in the art should understand that all or a part of the steps of the method according to the embodiments of the present invention may be implemented by a program instructing relevant hardware. The program may be stored in computer readable storage media. When the program runs, the program executes steps of the method specified in any embodiment of the present invention. The storage media may be any media capable of storing program codes, such as a Read Only Memory (ROM), a Random Access Memory (RAM), a magnetic disk, or a Compact Disk-Read Only Memory (CD-ROM).

Finally, it should be noted that the preceding embodiments are merely provided for describing the technical solution of the present invention, but not intended to limit the present invention.It is apparent that persons skilled in the art can make various modifications, variations, and replacements to the invention without departing from the spirit and scope of the invention. The present invention is intended to cover the modifications, variations, and replacements provided that they fall within the scope of protection defined by the following claims or their equivalents.

## Claims

1. A Service Guide (SG) sending method, comprising:
generating a Service Guide Delivery Descriptor (SGDD) that comprises SG description information as a basis for a terminal to choose whether to acquire an SG through an interactive network; and
sending the SGDD to the terminal.

2. The SG sending method according to claim 1, wherein:
the SG description information comprises description information indicating whether any updated SG exists on the interactive network.

3. The SG sending method according to claim 1, wherein:
the SG description information comprises description information of an updated SG on the interactive network.

4. The SG sending method according to claim 1, wherein:
the SG description information comprises description information indicating whether the interactive SG comprises any fragments other than a broadcast SG.

5. A Service Guide (SG) acquiring method, comprising:
according to a received Service Guide Delivery Descriptor (SGDD), acquiring SG description information comprised in the SGDD; and
acquiring the SG through an interactive network if the SG description information fulfills preset conditions.

6. The SG acquiring method according to claim 5, wherein:
the SG description information comprises description information indicating whether any updated SG exists on the interactive network; and
the preset conditions comprise the following condition: the interactive SG description information indicates that an updated SG exists on the interactive network.

7. The SG acquiring method according to claim 5, wherein:
the SG description information comprises description information of an updated SG on the interactive network; and
the preset conditions comprise the following condition: description information of the updated SG on the interactive network differs from stored SG description information.

8. The SG acquiring method according to claim 5, wherein:
the SG description information comprises description information indicating whether the interactive SG comprises any fragments other than a broadcast SG; and
the preset conditions comprise: the interactive SG description information indicates that the interactive SG comprises fragments other than the broadcast SG.

9. A server, comprising:
a generating module, configured to generate a Service Guide Delivery Descriptor (SGDD) that comprises SG description information as a basis for a terminal to choose whether to acquire an SG through an interactive network; and
a sending module, configured to send the SGDD to the terminal.

10. A terminal, comprising:
a description information acquiring module, configured to acquire, according to a received Service Guide Delivery Descriptor (SGDD), Service Guide (SG) description information comprised in the SGDD; and
an SG acquiring module , configured to acquire the SG through an interactive network if the SG description information fulfills preset conditions.

11. A Service Guide (SG) processing system, comprising:
a server, configured to generate a Service Guide Delivery Descriptor (SGDD) that comprises SG description information; and
a terminal, configured to acquire the SG through an interactive network if the SG description information fulfills preset conditions.
